# EUROPEAN PATENT SPECIFICATION

(11) **EP 3 983 620 B1**
(45) Date of publication and mention of the grant of the patent: **23.07.2025**
(21) Application number: 20822087.1
(22) Date of filing: 12.06.2020
(51) Int. Cl.: E04B 1/74, E04F 15/18, F24D 3/14, E04B 1/80, F24D 13/02

(54) **INSULATING MODULAR PANEL CONFIGURATION**
ISOLIERENDE MODULARE PLATTENKONFIGURATION
CONFIGURATION DE PANNEAUX MODULAIRES ISOLANTS

(30) Priority: 12.06.2019 US 201962860491 P
(43) Date of publication of application: 20.04.2022
(73) Proprietor: Bennett, Rodger, Newport News, VA 23602 (US); Vaughn, Celeste, Newport News, VA 23606 (US)
(72) Inventor: Bennett, Rodger, Newport News, VA 23602 (US); Vaughn, Celeste, Newport News, VA 23606 (US)
(74) Representative: Bianchetti & Minoja with Trevisan & Cuonzo IPS SRL
(86) International application number: PCT/US2020/037334
(87) International publication number: WO 2020/252219

(56) References cited:
- EP-B1- 2 148 965
- EP-B1- 2 239 512
- WO-A1-02/37032
- WO-A1-2007/111418
- CN-A- 102 587 515
- GB-A- 2 444 241
- US-A- 4 318 258
- US-A- 5 104 715
- US-A1- 2005 064 145
- US-A1- 2014 097 169
- US-A1- 2015 276 235
- US-A1- 2017 284 108
- US-A1- 2018 017 269
- US-A1- 2018 051 892
- US-A1- 2018 223 543
- US-B1- 8 844 227

## Description

### BACKGROUND

### Technical Field

The present application relates to an insulating modular panel which may be installed on an installation surface to provide certain functionality therefore. The modular aspect of the panel configuration greatly facilitates manufacturing, design, use and installation, transport, and storage. Moreover, it reduces installation errors. The panels may provide for efficient and fast installation of energy transfer elements between an installation surface and a top layer.

### Description of Related Art

In construction and industrial applications, often surfaces are insulated to prevent or reduce heat waste. Heat waste is inefficient, expensive, and contravenes environmental goals associated with reduced power consumption or fuel emissions.

Additionally, certain improvements have been made to the manner of heating or cooling surfaces which are considered desirable. In some applications, heating or cooling is applied at the installation surface. For example, in flooring applications, heating elements may be installed below the surface of the finished floor and above the subfloor to heat the finished floor. Alternatively, surfaces may be refrigerated or cooled.

Examples of insulating modular panels according to the state of the art are generally known from EP2148965B1, EP2239512B1, WO02/37032A1, GB2444241A and WO2007/111418A1.

WO2007/111418 A1 relates to an adiabatic plate used for heating a room. The adiabatic plate includes a plurality of support member receiving holes 10, which are formed at predetermined position, through the adiabatic plate, for installation of support members in the adiabatic plate, such that the adiabatic plate withstands an external load or impact.

Each of these insulating and energy transfer applications includes inefficiencies which seriously limit their use and desirability. For example, hydronic or water tubes which transfer energy have minimum bend radii which makes them complicated to install. Electrical wires laid for floor heating under tile floors are hard to install and complicated to dimension out. These are but two of a myriad of difficulties plaguing these types of applications. In particular, all of these applications require a lot of planning and calculating to determine how much of each installation component is required and how it should be laid out to provide an appropriate installation. This time consuming and complicated design and planning phase not only deters use, but also increases the chances for mistakes. In general these projects are hard to implement, are costly, and inefficient. Mistakes in installation are difficult to rectify.

A need exists to provide a manufacture and a method to easily and quickly install insulating panels which transfer energy from one surface to another on installation surfaces which are sufficiently flexible to adapt to a wide variety of project types and sizes without the need for complicated planning or calculating.

### SUMMARY

The present application provides an efficient, fast, easy, and cost effective method to apply panels to an installation surface to direct energy transfer and provides a product to accomplish the same. The present application provides these benefits in part by providing a modular system in which the panels are predesigned with the needs of the installation in mind. By being predesigned as such, the planning and calculations required for the installations are largely predetermined. That is, predesigned panels which comprise the modular configuration creates uniformity which simplifies installation and reduces installation error. Moreover, the design of the panels predetermines many of the calculations or decision points necessary to affect the design; thereby reducing a seemingly infinite number of decisions points to a few. This fewer number of decision points increases efficiency in installation and reduces installation error. By way of example, without predesigned panels, an installer may layout wiring for floor heating in an effectively infinite number of paths on the installation surface. If those paths are predetermined by the design of the panels, then the installer follows the predetermined paths and thus may correctly lay out the wires in an optimal layout without having to design or calculate that layout. Therefore, the panels function as templates which guide the installer and reduce installation error.

The invention is set out in the appended set of claims.

Additionally, in some embodiments, the design of the panels may include standardized layouts for the transfer elements. In this way, not only is installation facilitated and on-site design eliminated, but the layouts can be standardized.

In some embodiments, channels may be incorporated which receive the transfer element and will determine the placement and routing of it. In these embodiments too, even though the transfer element is incorporated onsite, the configuration of the panels affords the benefits mentioned above and limits time- consuming design and calculation onsite.

In one embodiment not according to the invention, the insulating modular panel configuration includes at least one panel with a top surface, a bottom surface for coupling to an installation surface, at least one channel configured to receive a transfer element to transfer energy, and the panel is installed across an installation surface. Moreover, the composition of the panel is selected to provide thermal insulation between the installation surface and the top surface of the panel, and wherein the panel is configured for installation on the installation surface as part of a modular system.

In one embodiment, the panel is made of a material having a density between 8,0 and 96,1 Kg/m³ (0.5 and 6 lbs. per cubic feet). In one embodiment, the panel is made from a foamed material. The foamed material may be expanded polystyrene foam. In one embodiment the configuration further includes apertures. The apertures are filled in one embodiment. They include tapered walls in another embodiment. In one embodiment, the configuration includes a plurality of channels. In some embodiments, the channels are spaced 7,6 cm (3 inches) or 15,2 cm (6 inches) or 30,5 cm (12 inches) on center. In yet other embodiments, the bottom surface further comprises at least one protrusion or at least one depression. In one embodiment, the installation surface is a subfloor.

In one embodiment, the configuration includes at least one panel with a top surface, a bottom surface for coupling to an installation surface, a plurality of apertures configured to receive a filler material, and panel is installed across an installation surface. Moreover, the composition of the panel is selected to provide thermal insulation between the installation surface and a top surface of the panel, and the panel is configured for installation on the installation surface as part of a modular system.

In one embodiment not according to the invention, a method is provided wherein at least one panel is provided; wherein the panel includes a top surface, a bottom surface for coupling to an installation surface, and a channel configured to receive a transfer element adapted for transporting energy. The method includes coupling the panel to the installation surface. The method further includes providing a second panel having a channel and coupling the second panel to the installation surface. The method further includes placing one or more of the transfer element within the channels, wherein the composition of a panel is selected to provide thermal insulation between the installation surface and the top surface of the panel, and wherein the panel is configured for installation on the installation surface as part of a modular system.

In another embodiment, a method is provided including the steps of providing at least one panel with a top surface, a bottom surface for coupling to an installation surface, and a plurality of apertures. The method further includes coupling the panel to the installation surface. The method further includes providing a second panel having apertures and coupling said second panel to said installation surface. The method further includes filling the apertures with a filler, wherein the composition of a panel is selected to provide thermal insulation between the installation surface and the top surface of the panel, and wherein the panel is configured for installation on the installation surface as part of a modular system.

In yet another embodiment not according to the invention, a method of using first and second panels is provided wherein the first panel includes a top surface, a bottom surface for coupling to an installation surface, and a channel configured to receive a transfer element adapted for transferring energy. The method further includes coupling the first panel to the installation surface. The method further includes providing a second panel having a channel and coupling the second panel to the installation surface. The method further includes placing one or more of the transfer elements within the channels of the first panel and the second panel, wherein the composition of the first and second panels is selected to provide thermal insulation between the installation surface and the top surface of said first and second panels.

### BRIEF DESCRIPTION OF THE DRAWINGS

FIG. 1 depicts the top surface of an embodiment of an insulating modular panel.
FIG. 2A depicts a cross sectional view of the panel of FIG. 1 along section 2A-2A.
FIG. 2B depicts a cross section view of the panel of FIG. 1 along section 2B-2B.
FIG. 3 depicts a configuration of the bottom surface of an embodiment of an insulating modular panel.
FIG. 4 depicts a top surface view of an embodiment of an insulating modular panel which includes a transfer element arranged in first channels and second channels.
FIG. 5 depicts a top surface view of an embodiment of an insulating modular panel which includes a transfer element with filler.
FIG. 6 depicts a cross sectional view of an embodiment of an insulating modular panel which includes a transfer element with filler.
FIG. 7 depicts an embodiment of an insulating modular panel with angled channels.
FIG. 7A depicts a cross section view along section 7A-7A of FIG. 7.
FIG. 7B depicts a cross section view along section 7B-7B of FIG. 7.
FIG. 8 depicts an embodiment of an insulating modular panel with curved channels.
FIG. 8A depicts a cross section view along section 8A-8A of FIG. 8.
FIG. 8B depicts a cross section view along section 8B-8B of FIG. 8.
FIG. 9 depicts an embodiment of an insulating modular panel with an asymmetric configuration.
FIG. 9A depicts a cross section view of along section 9A-9A of FIG. 9.
FIG. 9B depicts a cross section view of along section 9B-9B of FIG. 9.
FIG. 10 depicts an embodiment of an insulating modular panel with square apertures.
FIG. 10A depicts a cross section along section 10A-10A of FIG. 10.
FIG. 10B depicts a cross section view along section 10B-10B of FIG. 10.
FIG. 11 depicts an embodiment of a bottom surface of an insulating modular panel.
FIG. 12 depicts an embodiment of an insulating modular panel wherein the transfer element is hydronic.
FIG. 13 depicts an embodiment of an insulating modular panel without channels.
FIG. 14 depicts an embodiment of the bottom surface of an insulating modular panel.
FIG. 15 depicts examples of protrusions and recessions on the bottom surface of an insulating modular panel.

### DETAILED DESCRIPTION

In the following detailed description, numerous specific details are set forth by way of examples in order to provide a thorough understanding of the relevant teachings of this application. It should be noted, however, that the present teachings may be practiced without such details. In other instances, known methods, procedures and components have been described at a relatively high level, without detail, in order to avoid unnecessarily obscuring aspects of the teachings.

The invention is defined by the claims and any other aspects, configurations or embodiments set forth herein not falling within the scope of the claims are for information only.

The insulating modular panel configuration of the present application is a panel structure, comprising one or more panels, that assists a user with the installation of insulation panels on a surface. The panel (hereinafter generally described with respect to one of the panels in the modular configuration) may be configured to receive one or more energy transfer elements, for example for heat transfer or for cooling. Such element may include wires or hydronic tubes. A panel may be configured to receive the transfer elements and the transfer elements may be incorporated into the panel onsite. Alternatively, the panel may be preconfigured with the transfer elements already incorporated therein. A panel may include more than one type of transfer elements for transferring energy.

The insulating modular panel enables a user to more easily install the modular configuration without time-consuming or complicated planning and design and without the need for excessive computation of the amounts of components needed.

The modular configuration is comprised of panels which are predesigned and placed on the installation surface, and in so functioning, simplify installation. Moreover, the preformed panels include features configured to receive the transfer elements.

Because the transfer element layout is predetermined in the panel, the need for onsite planning and design to determine the layout and calculations to determine the lengths of transfer elements required for the installation are mostly eliminated. Elimination of this need for design and computation not only reduces time, but also greatly reduces installation errors. Jobsite and installation errors are costly and are often very difficult to correct. By simplifying the installation process, time and money is saved and installation error is largely decreased. The present panels enable a user to install the predesigned panels in a modular configuration without much measurement, cutting, or assembly. As such, speed, cost, and efficiency of installation is largely increased whereas error and waste are largely decreased. Moreover, laying the predesigned panels on the installation surface allows the installer to prepare the installation surface with a uniform and flat layer having good structural integrity. This in turn facilitates a high quality installation of the final finish layer on top of the panels

An insulating modular panel may include channels and apertures which are arranged to facilitate installation of the transfer elements and reduce user error when installing. In addition, the panels protect the transfer elements and reduce the risk of damaging the elements during installation or in subsequent replacement or repairs. Furthermore, an insulating modular panel may comprise a material with a thermal resistance value or an R-Value inherent in its composition which function as an effective thermal insulator.

The insulating modular panel may be configured to receive a heat transfer element or energy transfer element while maintaining a generally planar surface. The generally planar surface facilitates installation on flat surfaces such as on floors or walls of structures. Nevertheless, where the surface contour of the installation surface is not flat, the insulating modular panel of the present application may be configured with an alternative surface which facilitates installation. For example, the panels may be especially adapted for installation on curved surfaces by forming the panels with curved surfaces. Moreover, where the installation surface has surface features, such as depressions or protrusions, the panels may be formed with complimentary or mating depressions or protrusions which match the installation surface and facilitate installation. Of course, depending on the design needs of the particular installation, panels with flat or planar surfaces may be installed on non-planar or contoured surfaces as well.

The panel may be molded to the user's dimensional preferences, thereby eliminating common installation errors. The insulating modular panel may also function as an underlayment or insulation layer and can be mechanically fastened to an installation surface. By way of example in flooring applications, the panel may be secured directly to a subfloor to eliminate lifting and shifting.

The panels may be provided with the transfer elements already incorporated into them. In such instances, the transfer elements may be connected to those of an adjacent panel onsite. Accordingly, the elements may include couplings for connection of the transfer elements. Methods and devices for coupling and connecting various types of transfer elements are known to those skilled in the art. Alternatively, the panel can be configured with the channels to receive the transfer element and the transfer element may be installed in the panel at the jobsite.

Moreover, the panels may be particularly adapted for insertion or incorporation of a specific transfer element which is off-the-shelf or custom-made, such a wires, tubes, pipes, wire grids, or wire harnesses.

In some embodiments, according to the invention, the panel is equipped with one or more apertures. The apertures may be open-ended to enable adhesive applied to the panel or to a surface of the panel to flow through to the opposing surface and subsequently to the installation surface. Such a configuration is capable of providing vertical structural support for the finished layer when used with the appropriate adhesive.

In addition, the insulating modular panel can readily accept many types of transfer elements. The transfer element may comprise electric wires, hydronic tubes, piping or tubing to carry other heat transfer elements including air, cooling or heating fluid, or other heat transfer media known in the art. As used herein, and unless context dictates otherwise, the term transfer element is intended to include known elements for transferring energy, including heat, including wiring, tubing, piping, including, but not limited to copper wiring, aluminum wiring, steel wiring, metal tubing or piping, including copper piping, steel, brass, or aluminum tubing or piping, plastic or polymeric tubing and piping, including nylon, PEX to name a few.
Moreover, multiple types of transfer elements may be incorporated into a panel or a panel can be configured with channels to receive multiple types of transfer elements. As used in the description herein and throughout the claims that follow, the meaning of"a,""an," and"the" includes plural reference unless the context clearly dictates otherwise. Also, as used in the description herein, the meaning of"in" includes"into" and"on" unless the context clearly dictates otherwise.

The insulating modular panel may be made from any suitable material that accomplishes the goals of the invention. The panels may be constructed from a foam-type material that is insulating. In such a configuration, the foam-type construction provides an insulating barrier which separating the transfer element from the installation surface. Some examples of foam-type materials more fully discussed below. Moreover, other plastic or polymeric materials may be used to construct the panel. Examples of materials which may be used to construct the panel is more fully discussed below. The insulating function prevents heat loss through the installation surface and improves energy efficiency.

The transfer element may be secured in place by any appropriate fastening means with or without adhesive. It may be friction fit. It may be held in place by gravity. It may be coupled in place with the use of mechanical means such as straps, blockades, covering layers, or fasteners. It may be coupled in place with clips, staples, or tie downs. It may be secured in place with adhesive, including self-adhesive mesh tape. It may be secured in place with liquid adhesive polymeric adhesive, epoxy, resin, silicone, self-leveling agent, bonding agents, flooring adhesive, tile adhesive, concrete, mortar, thinset mortar, or fillers.

Additionally, the insulating modular panel is secured to the installation surface by chemical or mechanical means. For example, the panel may be coupled to the installation surface with fasteners, including nails, screws, clips, staples, etc. It may be coupled to the installation surface with adhesive materials such as those listed in the paragraph above with respect to the transfer elements or those known in the art. It may also be laid in place and sandwiched between other surfaces which hold it in place.

The insulating modular panel may also be used as an underlayment in installations. Specifically with respect to flooring applications, the panel may be used as underlayment for a finished flooring without the use of a transfer element. In other applications, including floor or wall applications, it may be used as underlayment to insulate the surface, to prepare the surface with an appropriate structural attribute such as rigidity or flatness, or to provide a layer in which internal elements may be embedded. One example of the latter includes embedding wiring or other types of elements in solid surfaces such as concrete walls.

The materials used for the construction for the insulating modular panel may vary and are generally selected based on the application. The material is generally selected to be sufficiently rigid to enabling the installer to measure and cut the insulating modular panel more easily, for example a material with a density of about 8,0 to about 96,1 Kg/m³ (about 0.5 to about 6 lbs. per cubic feet). Another example includes a material with a density of about 36,8-43,2 kg/m³ (2.3-2.7 lbs. per cubic feet). Another example includes foamed polymeric material with a density of 36,8-43,2 kg/m³ (2.3-2.7 lbs. per cubic feet). Although, in applications where the panel is required to be highly flexible and conform to the contour of the installation surface, other materials may be used to affect the desired flexibility.

Non-limiting examples of materials which may be employed in the construction of the panel include, but are not limited to, expanded polypropylene foam, expanded polystyrene foam, ethylene propylene diene monomer, polyvinyl chloride, polyurethane, polyethylene, and high-density polyethylene, or any combination thereof. Moreover, foamed or expanded versions of all polymeric material capable of being produced as expanded or in foam form is also contemplated herein. Natural materials such as cork may also be used.

The panel of the present application may be constructed as a monolith using a single material as noted above. Alternatively, it may be constructed from a combination of two or more of said materials. The construction may combine the materials, incorporate them in the form of a matrix, or may optionally encase the panel body in an exterior layer such as a thermoplastic wrap.

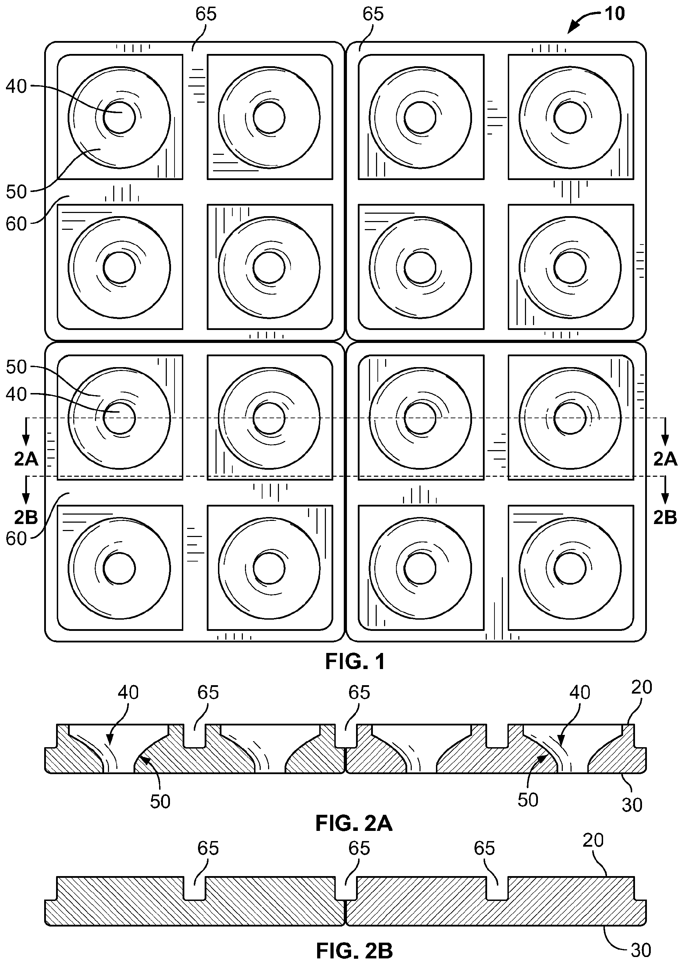

FIG. 1 shows four insulating modular panels 10 comprises top surface 20, bottom surface 30, plurality of first apertures 40 arranged in a row, and first channels 60 each running perpendicular to second channels 65 (see FIGs. 2A-2B).

Alternatively, all four panels shown in FIG. 1 may be integrated as a single panel. That is to say that the size of each panel can be designed as desired and is not limited to the specific configuration shown, with two channels and four apertures.

As is illustrated in other embodiments, the apertures, if incorporated into the panel, need not be arranged in rows and may be asymmetrically configured.

Moreover, they may be selectively located, based on the design considerations, to optimize between the desired level of adhesion, the desired rigidity, the amount of materials used, and the custom needs of a particular application.

In one embodiment, insulating modular panel board 10 may be about 15,2 to about 182,9 cm (about 6 to about 72 inches) in length, about 15,2 cm to 243,8 cm (about 6 to about 96 inches) in width, and about 0,63 to about 15,24 cm (about 1/4 to about 6 inches) in depth. It may be configured to cover an area between about 223,0 cm² to about 3,34 m² (about 1/4 to about 36 sq. ft). The dimensions of the panel may be adjusted based on the size and type of application to optimize between a number of factors. Some such factors include the expanse of the installation surface, the number of panel units to be used, amount of filler or adhesive material needed, and design flexibility with respect to the layout of the panels. Other design considerations in selecting the size of the panel may include limitations in the manufacturing process. In another embodiment, the insulating modular panel may be 61,0 cm (24 inches) in length, 91,4 cm (36 inches) in width, 1,27 cm (1/2 inch) in depth, and configured to cover 0,56 m² (6 sq. ft).

The dimensions of the channels may be selected based on the particular application, such as what type and size of element will be used in them, or based on the desired structural features of the panel, such as flexibility, rigidity, number of aperture, etc. In the embodiment, shown in FIG. 1, first channels 60 and second channels 65 are greater than 0,63 cm (1/4 inch) and less than 1,27 cm (1/2 inch) in depth and about 0,63 cm (1/4 inch) in width. Note that in this embodiment, the channels only extend through a portion of the thickness of the panel.

In one embodiment, the first aperture 40 is about 2,46 cm (0.97 inch) on top surface 20 and about 0,79 cm (0.31 inch) on bottom surface 30, and aperture walls 50 are curved (see FIG. 2A). In yet another embodiment, first aperture 40 has a depth equal to the depth of insulating modular panel board 10 and is about 1,27 to about 2,54 cm (about 1/2 to about 1 inch) in diameter on top surface 20 and about 0,25 to about 1,27cm (about 1/10 to about 1/2 inch) in diameter on bottom surface 30. In yet another embodiment, insulating modular panel 10 comprises about 384 first apertures 40, about 8 first channels 60, and about 12 second channels 65. In yet another embodiment, panel 10 comprises about 350 to about 410 first apertures 40 positioned parallel to first channels 60 and second channels 65. In yet another embodiment, first channels 60 and second channels 65 comprise a width of about 0,317 to about 1,905 cm (about 1/8 to about 3/4 inch). In yet other embodiments, the panels may be preformed with any of 7,62, 15,24, 22,86 or 30,48 cm (3", 6", 9" or 12") on-center channel patterns.

The panel shown in FIG. 1 is configured to receive a transfer element within channel 60 or channel 65 (not shown in FIG. 1). Additionally, the channels 60 and 65 in the embodiment of FIG. 1 are offset from the edges of the panel so that the placement of the transfer elements does not fall on a seam between panels.

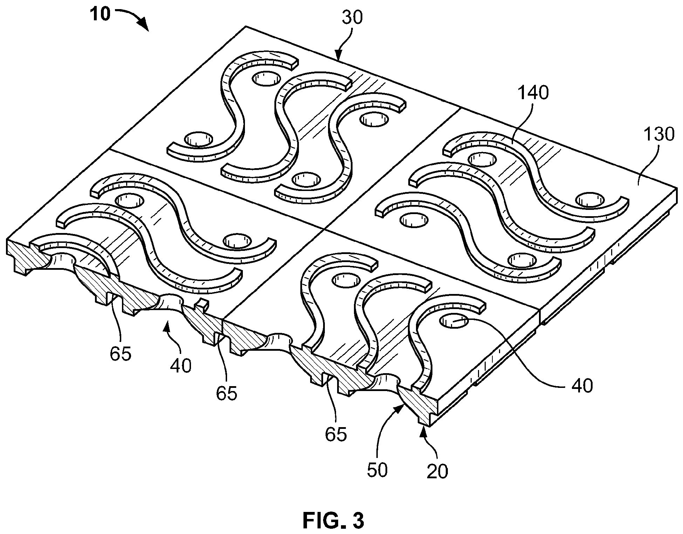

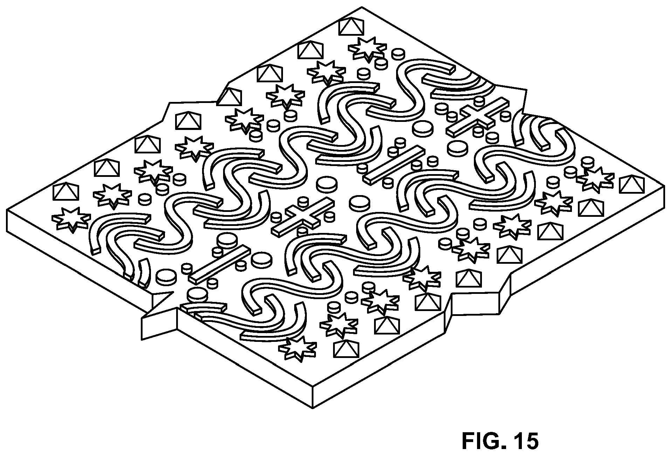

FIG. 3 shows an embodiment of a bottom surface configuration for panel 10. Bottom surface 30 may comprise cavity 130 and a plurality of protrusions 140 extending from bottom surface 30 (see FIG. 3). A plurality of protrusions 140 and a plurality of cavities or recessions 130 may be evenly spaced on bottom surface 30 in the shape of an"S" and curve around plurality of first aperture 40. These S-curves can provide strength in multiple directions and also create a surface feature that aids adhesion. This plurality of protrusions and recessions may take many forms and styles. Some examples of alternative forms and styles are shown in FIG. 15.

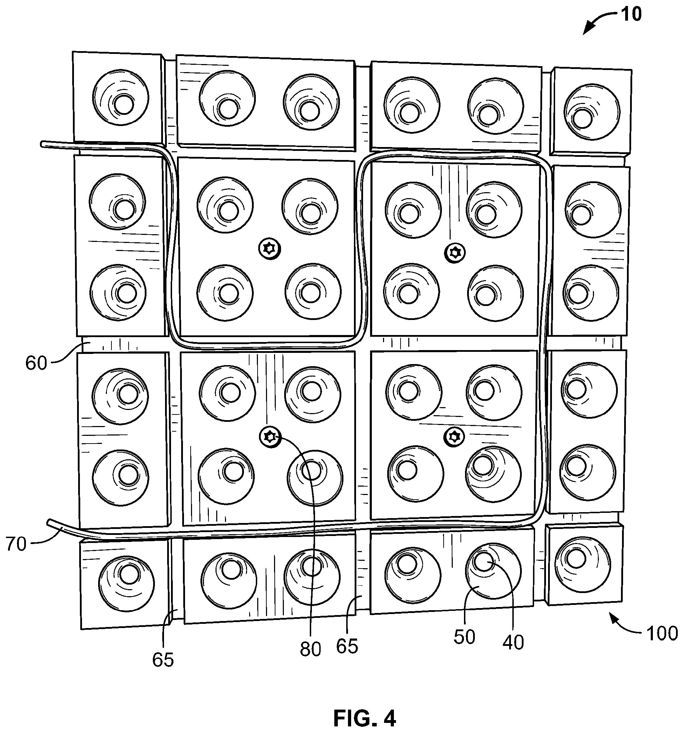

In practice, as shown in the embodiment of FIG. 4, one or more insulating modular panels 10 may be laid out onto an installation surface (surface not shown). The panel may be secured in place on the installation surface (surface not shown). In FIG. 4, fasteners 80 are used to secure the panel to the installation surface. For example, as shown in FIG. 4, one or panels 10 may be laid out on a subfloor and screwed or nailed to the subfloor.

In the embodiment of FIG. 4, the panel 10 is configured with channels to receive transfer elements onsite. Transfer element 70 is routed through first channels 60 and second channels 65. The transfer elements may be placed in all or in some of the channels as needed to affect the desired layout or consistent with manufacturer's recommendations. In FIG. 4, element 70 is routed to create an"S" shape. By way of example, in a flooring application for installing heating elements, the element 70 may be selected to be copper wire for resistive heating and would be routed through the channels with sufficient distance between the wires to prevent overheating.

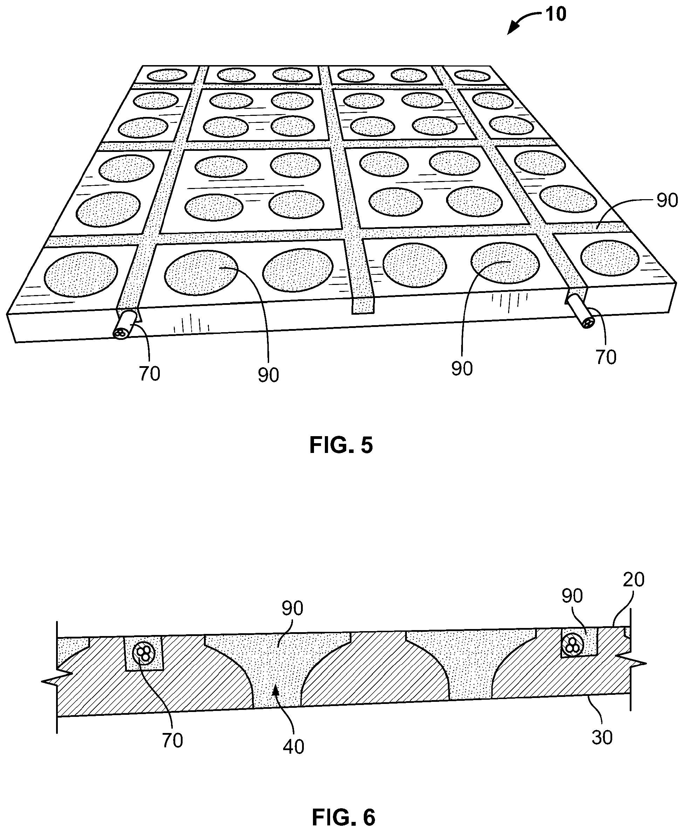

In certain application, it may be desirable to additionally secure the panels to the installation surface with adhesive. In other applications, it may be desirable to seal the panel. In yet other applications, it may be desirable to impart added rigidity or flexibility to the panel by incorporating rigid or flexible materials. In such applications, as shown in FIG. 5, the apertures and channels may be covered with material that achieves the intended function. For example, in flooring applications, a layer of thinset mortar 90 may be applied to top surface 20 of the panel 10. The mortar 90 saturates first apertures 40, first channels 60, and second channels 65, binds to the subfloor and provides added coupling of the panel to the installation surface. Moreover, the thinset mortar provides adhesion for finished flooring (not shown) to be installed on top of the panel. Further still, inclusion of the thinset mortar also secures the transfer element 70 within the channel. In this embodiment, the transfer element is placed in the channel and secured in place with the thinset mortar, whereas in other applications, the transfer element may be captively placed within the channels as more fully described herein.

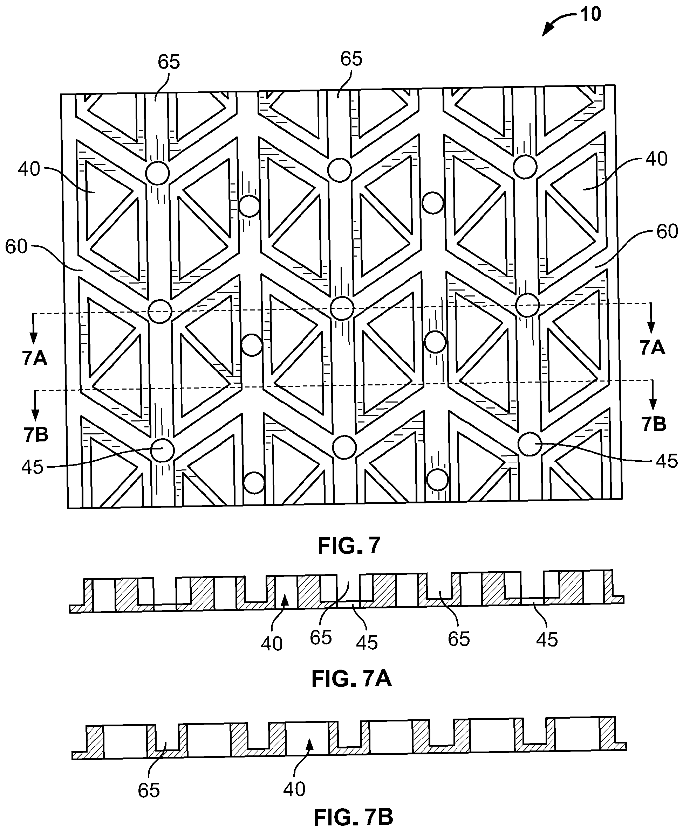

FIG. 6 shows a cross sectional view of the installation of FIG. 5. Note that even though FIGs. 5 and 6 have been specifically described with respect a flooring application using wires and thinset mortar, the present application is not limited so. As noted above, the channels and apertures may be selected based on the desired attributes of the panel. Generally, panels may be designed to optimize strength, insulation, and minimize the volume of adhesive or filler required. The panels may also be designed to , minimize heat loss or heat transfer through the installation surface. The apertures may be designed to provide optimum support for the finished surface with the least amount of contact with the installation surface to minimize heat loss through the installation surface. Round apertures with tapered walls also reduce the volume of filler or adhesive needed for maximum adhesion.
The channels may be designed to optimally hold, captures, or protects the transfer elements. The channel size may be designed to securely hold the transfer element but require a minimum amount of adhesive required to transfer heat. The spacing of the channels may be selected to optimize onsite installation time, and maximize uniformity. Select examples of alternative configurations of apertures and channels are described with respect to FIGs. 7-15.

In FIGs. 7-7B, the aperture walls 50 are perpendicular to the plane of insulating modular panel 10 and first apertures 40 comprise a triangular shape and second apertures 45 comprise a circular shape. In this embodiment, first channels 60 are positioned at an angle of about 90 degrees with respect to second channels 65

The depth of first channels 60 and second channels 65 is greater than half the depth of insulating modular panel board 10.

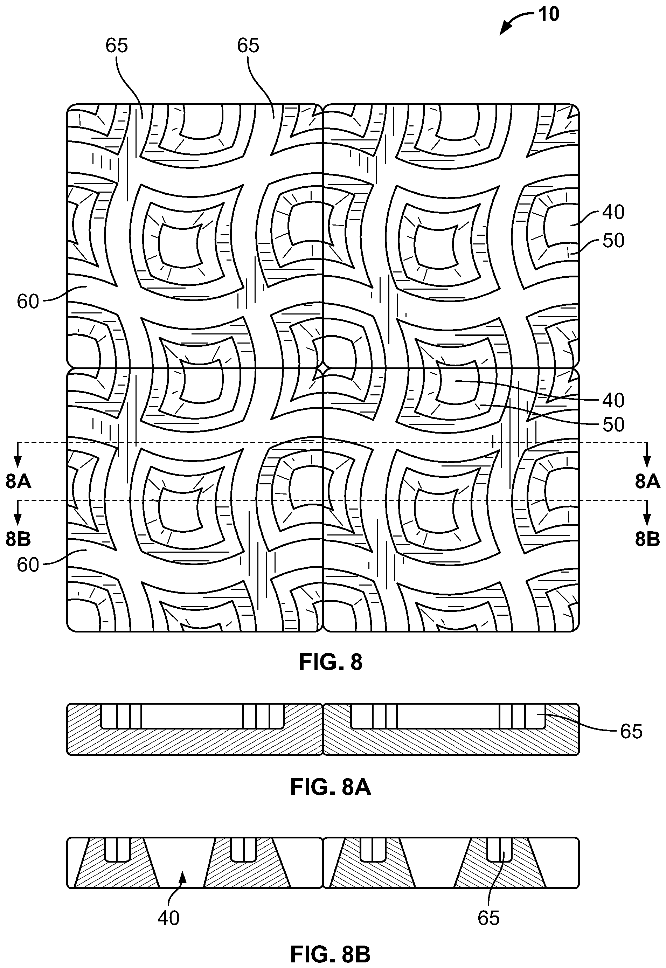

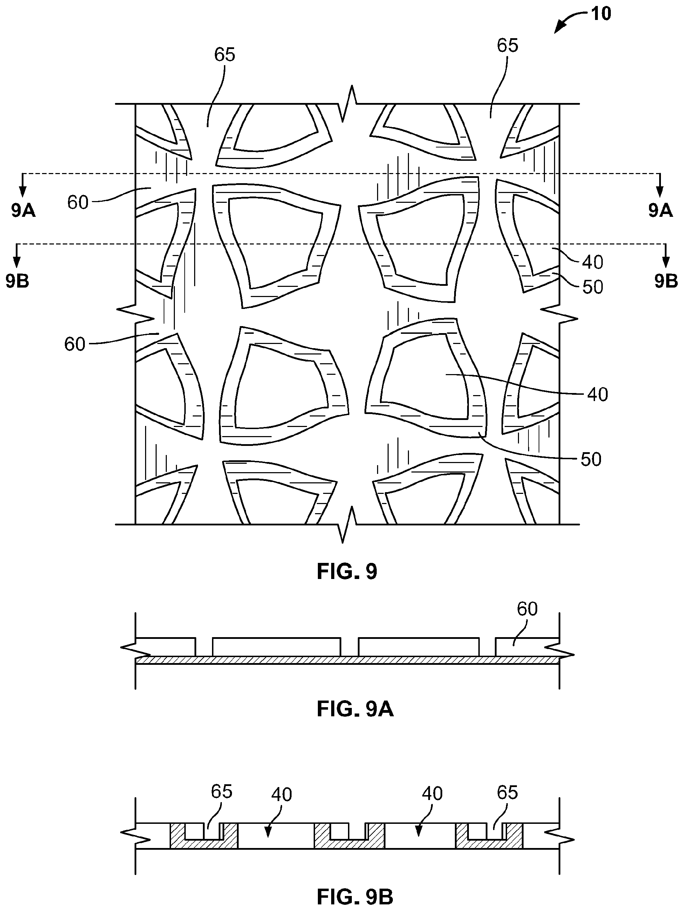

In FIGs. 8-8B, aperture walls 50 are angled, first channels 60 and second channels 65 are curved. In FIGs. 9-9B, first channels 60 and second channels 65 are uneven and first aperture 40 has four asymmetrical walls. The angle of aperture wall 50 is approximately 70° from the horizontal plane but can be configured for other angles, including between 30° and 90°. In addition, aperture wall 50 may comprise irregular walls which are curved or stepped in shape.

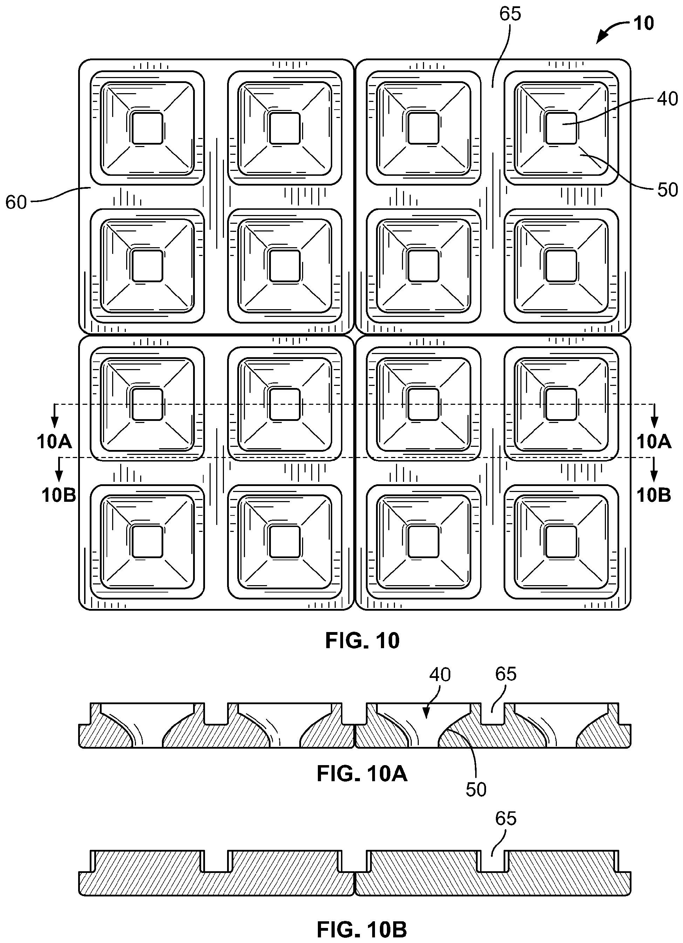

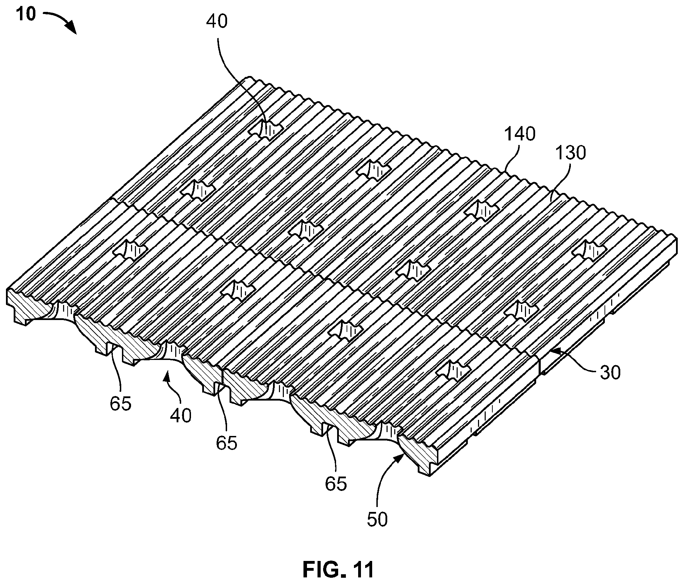

In FIGs. 10-10B, first aperture 40 is square in shape and first channels 60 run perpendicular to second channels 65 In this embodiment, bottom surface 30 comprises a recessed textured surface wherein a plurality of cavities 130 are alternately placed with a plurality of protrusions 140 covering entire bottom surface 30 FIG 11 illustrates another embodiment protrusions and cavities on the bottom surface of a panel.

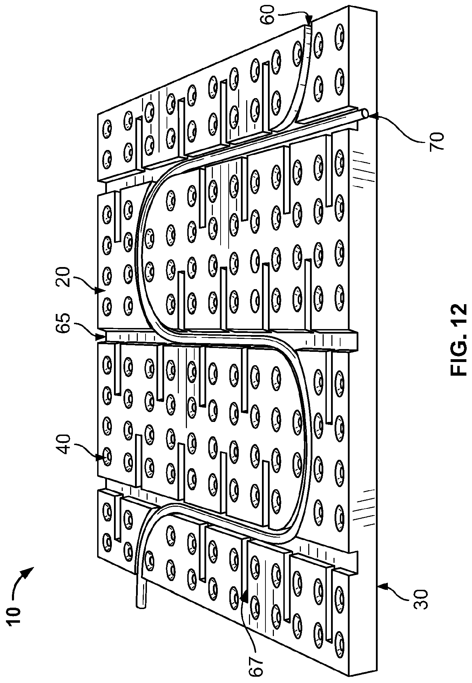

In FIG. 12, insulating modular panel 10 comprises top surface 20, bottom surface 30, first aperture 40, first channel 60, second channel 65, heat disbursement channel 67, and heat transfer element 70. In this embodiment, heat transfer element 70 may comprise a hollow tube to accept heated water. Alternatively, instead of water, any appropriate heat transfer medium may be used. A plurality of second channels 65 are placed at intervals wherein a plurality of first channels 60 are curved in shape and intersect with plurality of second channel 65 at uneven intervals. A plurality of heat disbursement channels 67 are staggered throughout and run perpendicular to plurality of second channel 65. Furthermore, in this configuration,
heat disbursement channel 67 disburses the heat away from heat transfer element 70, allowing for distribution of heat on the installation surface. In this embodiment, insulating modular panel board 10 is about 2 by about 3 feet and about 2,54 cm (1 inch) thick. First channel 60, second channel 65, and heat disbursement channel 67 are about 1,59 cm (5/8 inch) wide on top surface 20 and do not extend all the way through to bottom surface 30. First Aperture 40 extends from top surface 20 through bottom surface 30.
Although the hydronic transfer element is described with respect to FIG. 12, the embodiment of FIG. 12, it may be used with any of the contemplated configurations of the application. Conversely, any of the other transfer elements as contemplated herein may be used in the configuration disclosed in FIG. 12.

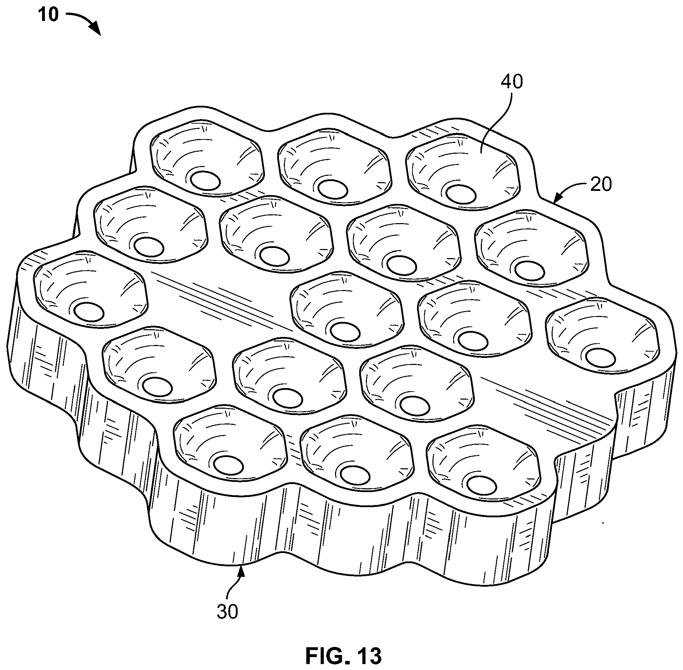

In FIG. 13, insulating modular panel 10 comprises top surface 20, bottom surface 30, and a plurality of first apertures 40. First aperture 40 may have a reduced diameter and extends from top surface 20 to bottom surface 30. This configuration further reduces heat conduction through the panel. For example, in a flooring application, this configuration further reduces heat conduction from the flooring material, such as tile to the installation surface, such as the subfloor, thereby reducing heat loss through the floor. In this embodiment, insulating modular panel board 10 may be a honeycomb shape and about 0,63 to about 10,16 cm (about 1/4 to about 4 inches) thick.

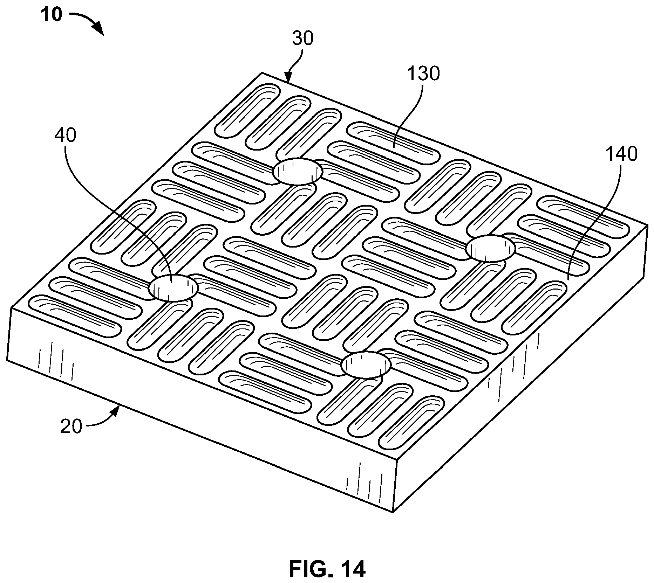

FIG. 14, shows a panel 10 having a bottom surface 30 including a plurality of cavity 130 and a plurality of protrusions 140. In this embodiment, plurality of cavity 130 are oval in shape and facilitate receipt of adhesive. In yet another embodiment, plurality of cavity 130 and plurality of protrusion 140 may be irregular in shape. In an alternate embodiment, bottom surface 30 may comprise multiple different types of shapes of plurality of protrusions 140. It is further contemplated that bottom surface 30 can have any organized or random configuration of cavity 130 or protrusion 140. Protrusions or cavities on bottom surface 30 facilitates adhesion to the installation surface.

As mentioned above, the features of each embodiment may readily be incorporated into another of the embodiments contemplated herein. Any contemplated top surface may be used in combination with any contemplated bottom surface embodiments. Moreover, any of the sizes, shapes, and configurations contemplated herein may be interchanged between various embodiments.

The present panels and methods have been described using specific examples as illustrated above. But in practice, the features of each may be combined and used in other combinations. Moreover, one or more of the aspects of the invention may be combined together and sold collectively. Moreover, the present invention may be formed into kits which include one or more of the elements of the invention included in a kit and sold. Such kits may be formed with various alternative embodiments so that the user can customize the panels. Moreover, the parts and kits may be formed in ways that permit such customization in situ or without tools. The present invention may be scaled as known in the art, and any corresponding kit may include different sizes of components. In summary, the aspects of the invention described herein can be adjusted and scaled as desirable.

## Claims

1. An insulating modular panel configuration comprising:
i) at least one panel (10);
ii) a top surface (20) on said panel;
iii) a bottom surface (30) on said panel for coupling to an installation surface;
iv) a plurality of apertures (40) configured to receive a filler material, extending from said top surface (20) through said bottom surface (30);
wherein the at least one panel is configured to be installed across an installation surface;
wherein the composition of the at least one panel is selected to provide thermal insulation between the installation surface and a top surface of said at least one panel; and
wherein the at least one panel is configured for installation on said installation surface as part of a modular system,
wherein the apertures (40) include tapered walls (50).

2. The configuration of Claim 1 wherein the at least one panel is made of a material having a density between 8,0 and 96,1 Kg/m³ (0.5 and 6 lbs. per cubic feet).

3. The configuration of Claim 1 wherein the apertures are filled with a filler material.

4. The configuration of Claim 1 wherein the at least one panel is made from a foamed material.

5. The configuration of Claim 4 wherein said foamed material is expanded polystyrene foam.

6. The configuration of Claim 1 wherein the installation surface is a subfloor.

7. The configuration of Claim 1 further comprising at least one channel (60 or 65) configured to receive a transfer element, said transfer element (70) being used to transfer energy.

8. A method of installation comprising the steps of:
i) providing at least one panel (10) according to any of the preceding claims; wherein said at least one panel includes a top surface (20), a bottom surface (30) for coupling to an installation surface, and a plurality of apertures (40) extending from said top surface (20) through said bottom surface (30), wherein the apertures (40) include tapered walls (50);
ii) coupling said at least one panel (10) to said installation surface;
iii) providing a second one of said at least one panel (10) having a plurality of apertures (40) extending from said top surface (20) through said bottom surface (30), wherein the apertures (40) include tapered walls (50);
iv) coupling said second panel to said installation surface;
i) filling said apertures (40) with a filler;
wherein the composition of the at least one panel is selected to provide thermal insulation between the installation surface and a top surface of said at least one panel; and wherein the at least one panel is configured for installation on said installation surface as part of a modular system.

## Patentansprüche

1. Modulare Isolierplattenkonfiguration, umfassend:
i) mindestens eine Platte (10);
ii) eine oberseitige Fläche (20) auf der Platte;
iii) eine unterseitige Fläche (30) auf der Platte zum Koppeln an eine Installationsfläche;
iv) eine Vielzahl von Öffnungen (40), die zur Aufnahme eines Füllmaterials konfiguriert sind und sich von der oberseitigen Fläche (20) durch die unterseitige Fläche (30) erstrecken;
wobei die mindestens eine Platte so konfiguriert ist, dass sie über einer Installationsfläche installiert werden kann;
wobei die Zusammensetzung der mindestens einen Platte ausgewählt ist, um eine Wärmedämmung zwischen der Installationsfläche und einer oberseitigen Fläche der mindestens einen Platte bereitzustellen; und wobei die mindestens eine Platte für die Installation auf der Installationsfläche als Teil eines modularen Systems konfiguriert ist,
wobei die Öffnungen (40) verjüngte Wände (50) beinhalten.

2. Konfiguration nach Anspruch 1, wobei die mindestens eine Platte aus einem Material mit einer Dichte zwischen 8,0 und 96,1 Kg/m³ (0,5 und 6 lbs. pro Kubikfuß) hergestellt ist.

3. Konfiguration nach Anspruch 1, wobei die Öffnungen mit einem Füllmaterial gefüllt sind.

4. Konfiguration nach Anspruch 1, wobei die mindestens eine Platte aus einem geschäumten Material hergestellt ist.

5. Konfiguration nach Anspruch 4, wobei das geschäumte Material expandierter Polystyrolschaum ist.

6. Konfiguration nach Anspruch 1, wobei die Installationsfläche ein Unterboden ist.

7. Konfiguration nach Anspruch 1, ferner umfassend mindestens einen Kanal (60 oder 65), der konfiguriert ist, um ein Übertragungselement aufzunehmen, wobei das Übertragungselement (70) verwendet wird, um Energie zu übertragen.

8. Installationsverfahren, das die folgenden Schritte umfasst:
i) Bereitstellen mindestens einer Platte (10) nach einem der vorhergehenden Ansprüche, wobei die mindestens eine Platte eine oberseitige Fläche (20), eine unterseitige Fläche (30) zum Koppeln an eine Installationsfläche und eine Vielzahl von Öffnungen (40) aufweist, die sich von der oberseitigen Fläche (20) durch die unterseitige Fläche (30) erstrecken, wobei die Öffnungen (40) verjüngte Wände (50) beinhalten;
ii) Koppeln der mindestens einen Platte (10) an die Installationsfläche;
iii) Bereitstellen einer zweiten der mindestens einen Platte (10) mit einer Vielzahl von Öffnungen (40), die sich von der oberseitigen Fläche (20) durch die unterseitige Fläche (30) erstrecken, wobei die Öffnungen (40) verjüngte Wände (50) beinhalten;
iv) Koppeln der zweiten Platte an die Installationsfläche;
i) Füllen der Öffnungen (40) mit einem Füllstoff;
wobei die Zusammensetzung der mindestens einen Platte ausgewählt ist, um eine Wärmedämmung zwischen der Installationsfläche und einer oberseitigen Fläche der mindestens einen Platte bereitzustellen; und wobei die mindestens eine Platte für die Installation auf der Installationsfläche als Teil eines modularen Systems konfiguriert ist.

## Revendications

1. Configuration de panneau modulaire isolant comprenant :
i) au moins un panneau (10) ;
ii) une surface supérieure (20) sur ledit panneau ;
iii) une surface inférieure (30) sur ledit panneau pour le couplage à une surface d'installation ;
iv) une pluralité d'ouvertures (40) configurées pour recevoir un matériau de remplissage, s'étendant à partir de ladite surface supérieure (20) à travers ladite surface inférieure (30) ;
dans laquelle l'au moins un panneau est configuré pour être installé sur une surface d'installation ;
dans laquelle la composition d'au moins un panneau est choisie pour fournir une isolation thermique entre la surface d'installation et une surface supérieure dudit au moins un panneau ; et dans laquelle au moins un panneau est configuré pour être installé sur ladite surface d'installation en tant que partie d'un système modulaire,
dans laquelle les ouvertures (40) comprennent des parois coniques (50).

2. Configuration de la revendication 1, dans laquelle l'au moins un panneau est constitué d'un matériau ayant une densité comprise entre 8,0 et 96,1 Kg/m³ (0,5 et 6 livres par pied cube).

3. Configuration de la revendication 1, dans laquelle les ouvertures sont remplies d'un matériau de remplissage.

4. Configuration de la revendication 1, dans laquelle l'au moins un panneau est fabriqué à partir d'un matériau expansé.

5. Configuration de la revendication 4, dans laquelle le matériau expansé est une mousse de polystyrène expansé.

6. Configuration de la revendication 1, dans laquelle la surface d'installation est un sous-plancher.

7. Configuration de la revendication 1, comprenant en outre au moins un canal (60 ou 65) configuré pour recevoir un élément de transfert, ledit élément de transfert (70) étant utilisé pour transférer de l'énergie.

8. Procédé d'installation comprenant les étapes suivantes :
i) la fourniture d'au moins un panneau (10) selon l'une quelconque des revendications précédentes ; dans lequel ledit au moins un panneau comprend une surface supérieure (20), une surface inférieure (30) pour le couplage à une surface d'installation, et une pluralité d'ouvertures (40) s'étendant à partir de ladite surface supérieure (20) à travers ladite surface inférieure (30), dans lequel les ouvertures (40) comprennent des parois coniques (50) ;
ii) le couplage dudit au moins un panneau (10) à ladite surface d'installation ;
iii) la fourniture d'un second dudit au moins un panneau (10) ayant une pluralité d'ouvertures (40) s'étendant à partir de ladite surface supérieure (20) à travers ladite surface inférieure (30), dans lequel les ouvertures (40) comprennent des parois coniques (50) ;
iv) le couplage dudit second panneau à ladite surface d'installation ;
i) le remplissage desdites ouvertures (40) avec un produit de remplissage ;
dans lequel la composition d'au moins un panneau est choisie pour fournir une isolation thermique entre la surface d'installation et une surface supérieure dudit au moins un panneau ; et dans lequel l'au moins un panneau est configuré pour être installé sur ladite surface d'installation en tant que partie d'un système modulaire.
